# EUROPEAN PATENT APPLICATION

(11) **EP 4 679 587 A1**
(43) Date of publication of application: **14.01.2026**
(21) Application number: 25184819.8
(22) Date of filing: 24.06.2025
(51) Int. Cl.: H01M 50/184, H01M 50/188, H01M 50/152, H01M 50/167

(54) **SECONDARY BATTERY AND METHOD OF MANUFACTURING SAME**

(30) Priority: 03.07.2024 KR 20240087651
(71) Applicant: SAMSUNG SDI CO., LTD., Yongin-si, Gyeonggi-do 17084 (KR)
(72) Inventor: MOON, Sanghyup, Yongin-si, Gyeonggi-do 17084 (KR); PARK, Keunwoo, Yongin-si, Gyeonggi-do 17084 (KR)
(74) Representative: Marks & Clerk LLP

(57) **Abstract**

A secondary battery (100) includes an electrode assembly (110), a cylindrical case (120) including a bottom portion (122), a side wall portion (124) connected to the bottom portion, and an upper opening portion facing the bottom portion, the cylindrical case accommodating the electrode assembly, a cap assembly (130) coupled to the upper opening portion, and a gasket (140) between the cylindrical case (120) and the cap assembly (130), the gasket (140) including a cylindrical body portion, a first extension portion extending from the cylindrical body portion toward an interior of the cylindrical case, and a second extension portion extending obliquely downward from the first extension portion toward the bottom portion of the cylindrical case, the second extension portion including a lower surface, an inner surface, and an inclined portion extending between and obliquely with respect to the lower surface and the inner surface.

## Description

### BACKGROUND

### 1. Field

The present disclosure relates to a secondary battery and a method of manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be manufactured by inserting an electrode assembly into a case and then sealing the case with a cap assembly. In the case of a cylindrical secondary battery, a beading portion and a crimping portion may be formed above the case to fix the cap assembly.

The above information disclosed in this Background section is for enhancement of understanding of the background of the present disclosure, and therefore, it may contain information that does not constitute related (or prior) art.

### SUMMARY

According to some embodiments of the present disclosure, there is provided a secondary battery including an electrode assembly, a cylindrical case that includes a bottom portion, a side wall portion connected to the bottom portion, and an upper opening portion facing the bottom portion, and accommodates the electrode assembly, a cap assembly coupled to one end of the side wall portion of the case, and a gasket interposed between the case and the cap assembly, in which the gasket includes a cylindrical body portion, a first extension portion extending from the body portion toward the inside of the case, and a second extension portion extending obliquely downward from the first extension portion toward the bottom portion, and the second extension portion includes an inclined portion formed by chamfering a lower surface and an inner surface.

According to some embodiments of the present disclosure, the width w1 of the inclined portion may be 30% to 70% of the width w2 of the lower surface before being chamfered.

According to some embodiments of the present disclosure, a height h1 of the inclined portion may be 30% to 70% of a height h2 of the inner surface of the second extension portion before being chamfered.

According to some embodiments of the present disclosure, the vertical cross section of the inclined portion may be in the form of a straight line.

According to some embodiments of the present disclosure, the vertical cross section of the inclined portion may be in the form of a curve.

According to some embodiments of the present disclosure, the side wall portion of the case includes a crimping portion formed by bending an end portion of the side wall portion and a beading portion formed by bending the side wall portion inwardly below the crimping portion, and the electrode assembly may be accommodated below the beading portion.

According to some embodiments of the present disclosure, the body portion of the gasket may be disposed to be in close contact with the crimping portion, and at least a portion of the first extension portion and the second extension portion of the gasket may be disposed to be in close contact with the beading portion and surround at least a portion of an inner surface of the beading portion.

According to some embodiments of the present disclosure, an insulating plate disposed on an upper surface of the electrode assembly may be further provided, and the second extension portion may be disposed at a predetermined distance from the insulating plate while at least a portion of the second extension portion is in close contact with the beading portion.

According to some embodiments of the present disclosure, a distance at which the second extension is spaced from the insulating plate may be 0.3 mm or more.

According to some embodiments of the present disclosure, the cap assembly may include a cap up, a safety vent disposed below the cap up, and a cap down disposed below the safety vent and electrically connected to the electrode assembly.

According to some embodiments of the present disclosure, the gasket may insulate the case from the safety vent and cap up.

According to some embodiments of the present disclosure, there is provided a method of manufacturing a secondary battery, including preparing a cylindrical case including a bottom portion, a side wall portion connected to the bottom portion, and an upper opening portion facing the bottom portion, inserting an electrode assembly into the case; a step of forming a beading portion by bending the side wall portion, disposing a gasket and a cap assembly to seal the upper opening portion, and forming a crimping portion by bending an end portion of the side wall portion, in which the gasket includes a cylindrical body portion, a first extension portion extending from the body portion toward the inside of the case, and a second extension portion extending obliquely downward from the first extension portion toward the bottom portion, and the second extension portion includes an inclined portion formed by chamfering a lower surface and an inner surface.

According to some embodiments of the present disclosure, a width of the inclined portion may be 30% to 70% of a width of the lower surface before being chamfered.

According to some embodiments of the present disclosure, a height of the inclined portion may be 30% to 70% of a height of the inner surface before being chamfered.

According to some embodiments of the present disclosure, the vertical cross section of the inclined portion may be in the form of a straight line.

According to some embodiments of the present disclosure, the vertical cross section of the inclined portion may be in the form of a curve.

According to some embodiments of the present disclosure, forming the crimping portion may include a step of bending an end portion of the side wall portion such that at least a portion of the first extension portion and the second extension portion of the gasket are in close contact with the beading portion while the second extension portion moves obliquely downward toward the bottom portion.

According to some embodiments of the present disclosure, an insulating plate may be disposed to be in contact with an upper surface of the electrode assembly, and the second extension portion may be disposed at a predetermined distance from the insulating plate while at least a portion of the second extension portion is in close contact with the beading portion.

According to some embodiments of the present disclosure, a distance at which the second extension is spaced from the insulating plate may be 0.3 mm or more.

According to some embodiments of the present disclosure, the cap assembly may include a cap up, a safety vent disposed below the cap up, and a cap down disposed below the safety vent and electrically connected to the electrode assembly, in which the gasket may insulate the case from the safety vent and the cap up.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a diagram showing an example of a secondary battery according to an embodiment of the present disclosure.
FIG. 2 is a diagram for explaining a compression process of a gasket according to an embodiment of the present disclosure.
FIG. 3 is a diagram showing a comparative example of a gasket.
FIG. 4 is a cross-sectional side view showing an example of a gasket according to an embodiment of the present disclosure.
FIG. 5 is a partially enlarged view illustrating a shape of a gasket according to an embodiment of the present disclosure.
FIG. 6 is a partially enlarged view illustrating a shape of a gasket according to another embodiment of the present disclosure.
FIG. 7 is a drawing showing an example in which a gasket according to the other embodiment of the present disclosure is applied.
FIG. 8 is a flowchart of a method of manufacturing a secondary battery according to another embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this disclosure, the sizes and relative sizes of regions illustrated in the drawings may be exaggerated for clarity of explanation. That is, the sizes shown in the drawings are only for convenience of understanding and are not limited thereto. In addition, identical reference numerals throughout the specification refer to identical components.

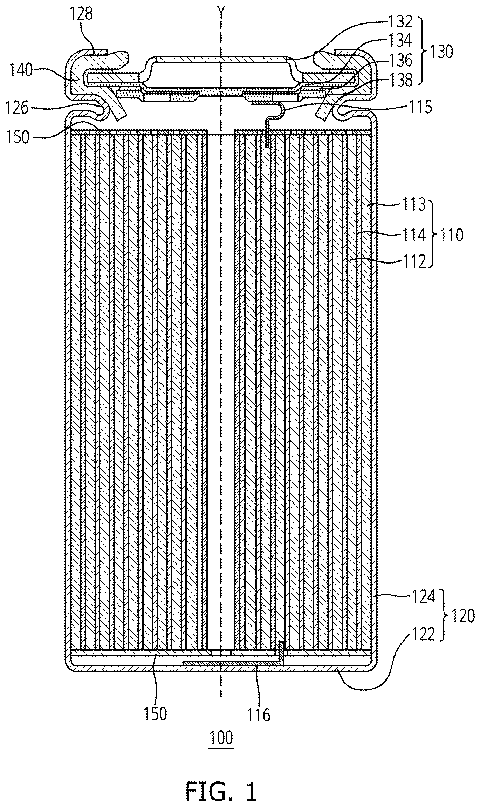

FIG. 1 is a perspective view showing an example of a secondary battery 100 according to an embodiment of the present disclosure. As illustrated in FIG. 1, the secondary battery 100 may include an electrode assembly 110, a case 120 that accommodates the electrode assembly 110 and an electrolyte therein, a cap assembly 130 that is coupled to an opening of the case 120 to seal the case 120, and an insulating plate 150 disposed between the electrode assembly 110 and the cap assembly inside the case 120.

The electrode assembly 110 may include a separator 114, and a first electrode 112 and a second electrode 113 disposed with the separator 114 between them, and may be wound in a jelly-roll shape around a winding axis Y.

The first electrode 112 may include a first substrate and a first active material layer disposed on the first substrate. A first lead tab 115 may extend outward from a first non-coated portion of the first substrate in which the first active material layer is not positioned, and the first lead tab 115 may be electrically connected to the cap assembly 130.

The second electrode 113 may include a second substrate and a second active material layer disposed on the second substrate. A second lead tab 116 may extend outward from a second non-coated portion of the second substrate in which the second active material layer is not positioned, and the second lead tab 116 may be electrically connected to the case 120. The first lead tab 115 and the second lead tab 116 may extend in opposite directions.

The first electrode 112 may function as an anode. In this case, the first substrate may be made of, e.g., aluminum foil, and the first active material layer may include, e.g., a transition metal oxide. The second electrode 113 may function as a cathode. In this case, the second substrate may be made of, e.g., copper foil or nickel foil, and the second active material layer may include, e.g., graphite.

The separator 114 may function to prevent short circuiting between the first electrode 112 and the second electrode 113 while allowing movement of lithium ions. The separator 114 may be made of, e.g., a polyethylene film, a polypropylene film, a polyethylene-polypropylene film, or the like.

The case 120 may accommodate the electrode assembly 110 and the electrolyte, and the case 120 and the cap assembly 130 may form the outer shape of the secondary battery 100. The case 120 may include a substantially cylindrical side wall portion 124, and a bottom portion 122 connected to one side of the side wall portion 124. An inwardly deformed beading portion 126 may be disposed on the side wall portion 124, and an inwardly bent crimping portion 128 may be disposed on the opening-side end portion of the side wall portion 124.

The beading portion 126 may prevent the electrode assembly 110 from moving inside the case 120 and may facilitate the fixation of the gasket 140 and the cap assembly 130. The crimping portion 128 may firmly fix the cap assembly 130 by pressing the edge of the cap assembly 130 through the gasket 140. The case 120 may be made of, e.g., nickel-plated iron.

The cap assembly 130 may include a safety vent 134, a cap up 132 disposed above the safety vent 134, and a cap down 138 disposed below the safety vent 134. The cap assembly 130 may further include an insulating member 136 that is inserted between the safety vent 134 and the cap down 138 to prevent a part other than the central portion of the safety vent 134 from coming into contact with the cap down 138, and a gasket 140 that insulates between the cap assembly 130 and the case 120. In the safety vent 134, the central portion of the case 120 may be in contact with the cap down 138, and the portion supported by the insulating member 136 may be spaced from the cap down 138. The safety vent 134 may have a notch that ruptures and releases gas when the internal pressure rises above a certain level.

The insulating plate 150 may be disposed to contact the electrode assembly 110 below the beading portion 126, and a tab opening for withdrawing the first lead tab 115 may be provided in the insulating plate 150. The cap assembly 130, which is electrically connected to the first electrode 112 by the first lead tab 115, may face the electrode assembly 110 with the insulating plate 150 interposed therebetween, and may be maintained in an insulated state from the electrode assembly 110 by the insulating plate 150.

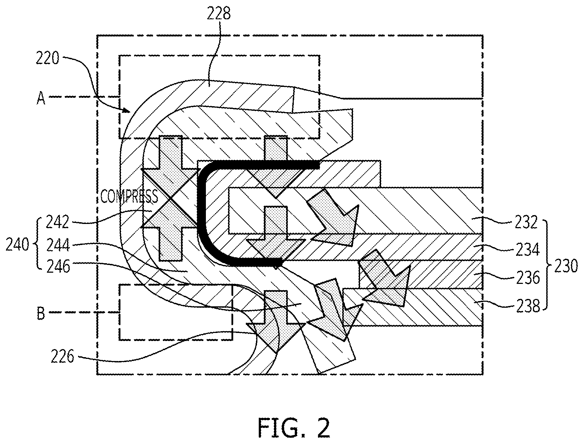

FIG. 2 is a drawing for explaining a compression process of a gasket 240 according to an embodiment of the present disclosure. In an embodiment, a case 220 may include a bottom portion, a side wall portion connected to the bottom portion, and an opening facing the bottom portion. A cap assembly 230 may be coupled to one end of the side wall portion of the case 220. A portion where one end of the side wall portion of the case 220 is bent and connected to the cap assembly 230 may be referred to as a crimping portion. For convenience of explanation, the direction of the bottom portion of the case 220 is defined as the downward direction, and the direction in which the cap assembly 230 is coupled to one end of the side wall portion of the case 220 is defined as the upward direction.

In an embodiment, the gasket 240 may be interposed between the case 220 and the cap assembly 230 to insulate the case 220 and the cap assembly 230. In detail, the cap assembly 230 may include a safety vent 234, a cap up 232 disposed above the safety vent 234, a cap down 238 disposed below the safety vent 234, and an insulating member 236 disposed between the safety vent 234 and the cap down 238. The case 220 may include a crimping portion 228 formed by bending an end portion of a side wall portion, and a beading portion 226 formed by bending the side wall portion inwardly below the crimping portion 228. The cap assembly 230 and gasket 240 may be mounted above the beading portion 226. As the crimping portion 228 is bent, the gasket 240 is compressed, and the cap assembly 230 and the gasket 240 may be mated/fixed to the case 220.

In an embodiment, at least a portion of the gasket 240 may surround the beading portion 226, thereby insulating the case 220 from the cap assembly 230 and/or the lead tab. In detail, the gasket 240 may include a body portion 242, a first extension portion 244 extending from the body portion 242 toward the inside , e.g., interior, of the case 220, and a second extension portion 246 extending obliquely downward from the first extension portion 244. For example, the second extension portion 246 may extend downward at a predetermined angle from the first extension portion 244 toward the bottom portion of the case 220. When the crimping portion 228 is bent, the body portion 242 of the gasket 240 may be in close contact with the crimping portion 228, and the first extension portion 244 may be in close contact between the cap assembly 230 and the beading portion 226. The second extension portion 246 may be disposed to surround at least a portion of the inner surface of the beading portion 226.

Referring to FIG. 2, the distribution direction of the pressure applied to the gasket 240 by the bending of the crimping portion 228 may be checked. When the end portion of the side wall portion of the case 220 is bent to form the crimping portion 228, the gasket 240 may be compressed in the vertical direction by being pressed between the beading portion 226 and the crimping portion 228. In this case, an area A is an area where a load is generated on the gasket 240 by pressure applied from above the gasket 240, and an area B is an area where stress is generated on the gasket 240 by pressure applied from above the gasket 240.

In this case, as the gasket 240 is compressed in the vertical direction, sagging may occur toward the bottom portion of the case 220. In detail, the pressure transmitted to the gasket 240 not only compresses the body portion 242 of the gasket 240, but may also be transmitted to the second extension portion 246 of the gasket 240 and the cap assembly 230 along the directions of arrows shown. The second extension portion 246 may sag toward the bottom portion of the case 220 and move obliquely downward due to the force transmitted in this way. In this case, the end portion of the second extension portion 246 may interfere with the electrode assembly accommodated in the case 220, causing a battery short circuit phenomenon. For example, this phenomenon may occur as the free space inside the case 220 is reduced due to the design to increase the capacity of the battery.

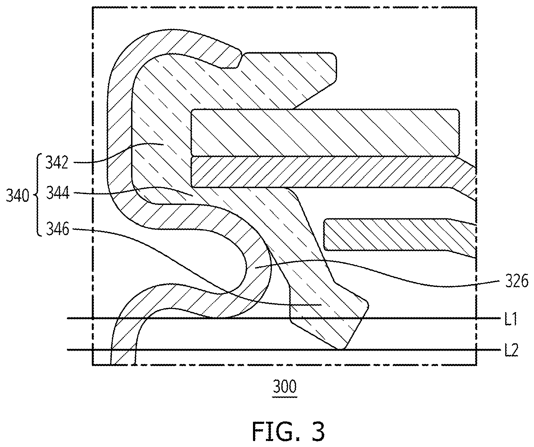

FIG. 3 is a drawing showing a comparative example 300 of a gasket 340. For example, the gasket 340 may include a body portion 342, a first extension portion 344 extending from the body portion 342, and a second extension portion 346 extending obliquely downward from the first extension portion 344. For example, the second extension portion 346 may extend downward at a predetermined angle from the first extension portion 344 toward the bottom portion of the case. The second extension portion 346 may be disposed to surround at least a portion of a beading portion 326 formed in the case. An electrode assembly may be disposed below the beading portion 326, so the electrode assembly and the insulating plate placed on the upper surface of the electrode assembly may be disposed to be spaced apart from the lower line L1 of the beading portion 326 by a certain distance or more.

For example, referring to FIG. 3, during the crimping portion formation process, the end portion of the second extension portion 346 may extend obliquely downward, so that the end line L2 of the second extension portion 346 may be formed below the lower line L1 of the beading portion 326. In this case, the risk of fire due to a battery short circuit may increase as the electrode assembly and insulating plate disposed below the lower line L1 of the beading portion 326 are pressed by the second extension portion 346.

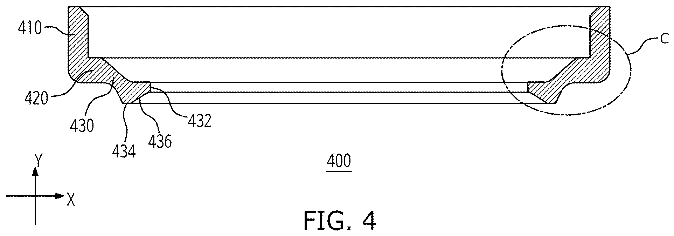

FIG. 4 is a cross-sectional side view showing an example of a gasket 400 according to an embodiment of the present disclosure. As illustrated, the gasket 400 may include a substantially cylindrical body portion 410 extending along a vertical direction (Y-axis) to have a predetermined length, a first extension portion 420 extending horizontally (X-axis) to be substantially perpendicular from the body portion 410, and a second extension portion 430 extending obliquely downward at a predetermined angle from the first extension portion 420.

In an embodiment, the first extension portion 420 may extend inwardly into the case from the body portion 410. Here, the expression "substantially perpendicular" means that the angle between the body portion 410 and the first extension portion 420 is perpendicular or close to perpendicular.

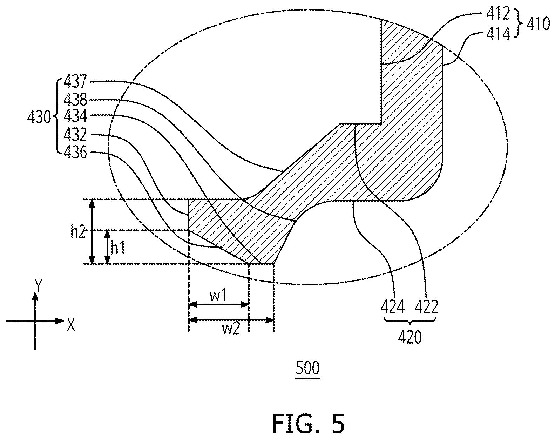

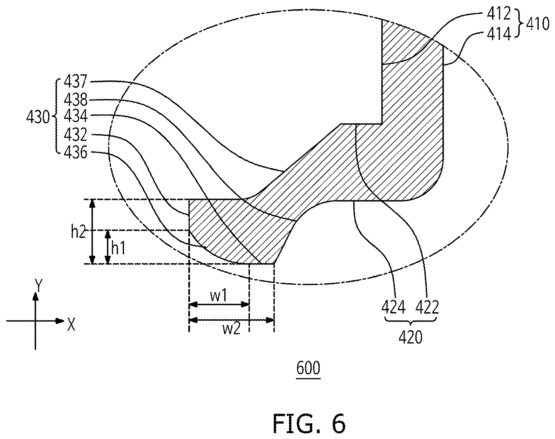

In an embodiment, the second extension portion 430 may include an inner surface 432 formed in a direction (Y-axis) parallel to the extension direction of the body portion 410, a lower surface 434 formed in a direction (X-axis) perpendicular to the inner surface 432, and an inclined portion 436 obtained by chamfering the inner surface 432 and the lower surface 434. The inclined portion 436 is formed by chamfering at least a portion of the lower surface 434 and at least a portion of the inner surface 432 at a corner at which the lower surface 434 and the inner surface 432 of the second extension portion 430 are in contact with each other. The inclined portion 436 may be formed to be inclined upward (e.g., toward the inner surface 423) at a predetermined angle at the end portion of the second extension portion 430. For example, referring to FIG. 4, the inclined portion 436 may extend and connect between the lower surface 434 and the inner surface 432, and may extend obliquely with respect to each of the lower surface 434 and the inner surface 432. For example, referring to FIG. 4, an obtuse angle may be defined between the inclined portion 436 and each of the lower surface 434 and the inner surface 432 within the second extension portion 430. Specific examples of the shape of the gasket 400 are described in detail later with reference to FIGS. 5 and 6.

With this configuration, even when the second extension portion 430 sags toward the bottom portion and the end portion of the second extension portion 430 moves obliquely downward, the electrode assembly may be prevented from interfering with the second extension portion 430. In detail, a corner at which the lower surface 434 and the inner surface 432 of the second extension portion 430 are in contact with each other may be chamfered, so that a flat surface of the inclined portion 436 may be disposed to face the electrode assembly side, thereby minimizing interference between the second extension portion 430 and the electrode assembly.

In FIG. 4, for convenience of explanation, it is explained that the inclined portion 436 is formed by chamfering the corner at which the lower surface 434 and the inner surface 432 of the second extension portion 430 are in contact with each other merely to clarify the shape of the second extension portion 430. For example, the inner surface 432, the lower surface 434, and the inclined portion 436 of the second extension portion 430 may be formed at once at the initial manufacturing stage by injection molding or the like into a desired shape (e.g., the inclined portion 436 may be directly inject molded into a flat shape without requiring a seperate chamfering stage).

FIG. 5 is a partially enlarged view illustrating the shape of a gasket 500 according to an embodiment of the present disclosure. FIG. 5 may be a partially enlarged view of an area C of the gasket illustrated in FIG. 4.

In an embodiment, the gasket 500 may include the substantially cylindrical body portion 410, the first extension portion 420 extending in an substantially vertical (e.g., perpendicular) direction from the body portion 410 (i.e. its thickness being vertical, and the thickness of the substantially cylindrical body portion 410 being horizontal), and the second extension portion 430 extending obliquely downward at a predetermined angle from the first extension portion 420 (i.e. its thickness being angled obliquely relative to the substantially cylindrical body portion 410 and the first extension portion 420).

The body portion 410 may extend to have a predetermined length along the vertical direction (Y-axis) and include an inner surface 412 and an outer surface 414. The outer surface 414 of the body portion 410 may be in close contact (e.g., direct contact) with the crimping portion of the case. For example, when forming a crimping portion, the upper portion of the body portion 410 may be bent substantially horizontally (X-axis) together with the end portion of the side wall portion of the case. In this case, the inner surface 412 of the body portion 410 may be in contact with the cap assembly, and the outer surface 414 of the body portion 410 may be in contact with the crimping portion of the case. For example, the thickness of the body portion 410, which is the distance between the inner surface 412 and the outer surface 414 of the body portion 410, may be approximately 0.6 mm to 0.7 mm.

The first extension portion 420 may extend in a horizontal direction (X-axis) to be substantially perpendicular from the body portion 410 and may include an upper surface 422 and a lower surface 424. The upper surface 422 of the first extension portion 420 may extend from the inner surface 412 of the body portion 410 and come into contact with the lower portion of the cap assembly. The lower surface 424 of the first extension portion 420 may extend from the outer surface 414 of the body portion 410 and may come into contact with the upper portion of the beading portion. The outer surface 414 of the body portion 410 and the lower surface 424 of the first extension portion 420 may be connected in a rounded shape with a predetermined curvature. For example, the diameter of the rounded portion where the outer surface 414 of the body portion 410 and the lower surface 424 of the first extension portion 420 are connected may be about 0.4 mm. For example, the inner surface 412 of the body portion 410 and the upper surface 422 of the first extension portion 420 may be connected to be perpendicular to each other, and may be connected in a rounded shape with a predetermined curvature, similar to the connection between the outer surface 414 of the body portion 410 and the lower surface 424 of the first extension portion 420. For example, the thickness of the first extension portion 420, which is the distance between the upper surface 422 and the lower surface 424 of the first extension portion 420, may be about 0.75 mm.

The second extension portion 430 may extend obliquely downward at a predetermined angle from the first extension portion 420, and may include an inner surface 432, a lower surface 434, an inclined portion 436, an upper inclined surface 437, and a lower inclined surface 438.

**In** an embodiment, the upper inclined surface 437 of the second extension portion 430 may extend obliquely downward at a predetermined angle from the upper surface 422 of the first extension portion 420. For example, the upper inclined surface 437 of the second extension portion 430 may extend obliquely downward at a predetermined angle approximately to the height at which the lower surface 424 of the first extension portion 420 is formed, and thereafter, may extend in the horizontal direction (X-axis) by a predetermined length. The downward sloping portion and the horizontally extended portion of the upper inclined surface 437 may be connected in a rounded shape. For example, the diameter of the rounded portion formed by connecting the inclinedly extended portion and the horizontally extended portion of the upper inclined surface 437 may be about 0.5 mm. In addition, the angle at which the upper inclined surface 437 of the second extension portion 430 is inclined relative to the upper surface 422 of the first extension portion 420 may be approximately 40 degrees.

In an embodiment, the lower inclined surface 438 of the second extension portion 430 may extend obliquely downward at a predetermined angle from the lower surface 424 of the first extension portion 420. For example, the angle at which the lower inclined surface 438 of the second extension portion 430 is inclined relative to the lower surface 424 of the first extension portion 420 may correspond to approximately the angle at which the upper inclined surface 437 of the second extension portion 430 is inclined relative to the upper surface 422 of the first extension portion 420. For example, the lower inclined surface 438 may have an overall rounded shape. For example, the diameter of the rounded portion of the lower inclined surface 438 may be about 0.6 mm. The lower inclined surface 438 of the second extension portion 430 may be disposed to surround at least a portion of the inner surface of the beading portion.

In an embodiment, the lower surface 434 and the inner surface 432 may be formed at the end portion of the second extension portion 430. The lower surface 434 of the second extension portion 430 may extend in a horizontal direction (X-axis) from the lower inclined surface 438, and the inner surface 432 of the second extension portion 430 may extend in a vertical direction (Y-axis) from the upper inclined surface 437.

In an embodiment, the inclined portion 436 may be formed between the lower surface 434 and the inner surface 432 of the second extension portion 430, e.g., at an obtuse angle with respect to each of the lower surface 434 and the inner surface 432 within the second extension portion 430. The inclined portion 436 may be formed by chamfering at least a portion of the lower surface 434 and at least a portion of the inner surface 432 at a corner at which the lower surface 434 and the inner surface 432 of the second extension portion 430 are in contact with each other. For example, the inclined portion 436 may be a chamfered corner (e.g., formed by an imaginary chamfering of an imaginary corner formed by an imaginary intersection between extension lines of the lower surface 434 and the inner surface 432 of the second extension portion 430).

In an embodiment, the inclined portion 436 may be formed by chamfering at least a portion of the lower surface 434. Accordingly, the width w1 of the inclined portion 436 may be formed to be 30% to 70% of the width w2 of the lower surface 434 before being chamfered. In addition, the inclined portion 436 may be formed by chamfering at least a portion of the inner surface 432. Accordingly, the height h1 of the inclined portion 436 may be 30% to 70% of the height h2 of the inner surface 432 before being chamfered. For example, referring to FIG. 4, the first width w1 of an extension line of the lower surface 434 to the imaginary corner may be 30% to 70% of the second width w2 (i.e., a total width of the lower surface 434 and the first width w1). For example, referring to FIG. 4, the first height h1 of an extension line of the inner surface 432 to the imaginary corner may be 30% to 70% of the second height h2 (i.e., a total height of the inner surface 432 and the first height h1).

For example, the width w2 of the lower surface 434 of the second extension portion 430 before being chamfered may be about 0.85 mm, and the width of the lower surface 434 after being chamfered may be about 0.25 mm. Accordingly, the width w1 of the inclined portion 436 formed by chamfering a portion of the lower surface 434 may be about 0.6 mm, e.g., the inclined portion 436 may be formed by chamfering about 70% of the width w2 of the lower surface 434.

As an additional example, the height h2 of the inner surface 432 of the second extension portion 430 before being chamfered may be about 0.65 mm, and the height of the inner surface 432 after being chamfered may be about 0.3 mm. Accordingly, the height h1 of the inclined portion 436 formed by chamfering a portion of the inner surface 432 may be about 0.35 mm, e.g., approximately 54% of the height h2 of the inner surface 432 may be chamfered to form the inclined portion 436.

In an embodiment, based on the cross-sectional view of the gasket 500 in the vertical direction (Y-axis), the vertical cross-section of the inclined portion 436 may be formed to be inclined upward in the form of a straight line. The angle at which the inclined portion 436 is inclined may be determined in response to the ratio of the chamfered area of the inclined portion 436 relative to the lower surface 434 and the inner surface 432, and may be appropriately changed between about 20 degrees and 60 degrees.

According to an embodiment, the second extension portion 430 may be disposed at a certain distance from the electrode assembly accommodated inside the case when the secondary battery is assembled. For example, the crimping portion may be formed by bending a side wall portion of the case after a gasket 500 and a cap assembly are placed on one end of the case in which the electrode assembly is accommodated. In this case, as the side wall portion of the case is bent, the gasket 500 is compressed and the end portion of the second extension portion 430 may move obliquely downward toward the electrode assembly. In this case, the flat surface of the inclined portion 436 formed in the second extension portion 430 is disposed to face the electrode assembly side, so that interference between the second extension portion 430 and the electrode assembly may be minimized. In addition, when the end portion of the second extension portion 430 is moved obliquely downward toward the electrode assembly, the extreme end of the second extension portion 430 may be spaced apart from the electrode assembly by a certain distance or more.

In an embodiment, when the crimping portion is bent to mate/fix the cap assembly and gasket 500 to the side wall portion of the case, the thickness of the crimping portion may be managed in an upper limit mode, a normal mode, a lower limit mode, or the like depending on the compressibility of the gasket 500. In terms of increasing battery capacity, it may be advantageous to perform management in a lower limit mode in which the compression ratio of the gasket 500 is maximized (e.g., a mode in which the compression ratio of the gasket 500 is 50% or more or a mode in which the mating thickness of the crimping portion is 2.4 mm or less), but in this case, the variable of risk of ignition due to sagging of the gasket 500 may be traded off. Accordingly, when considering process dispersion occurring in the bending process, or the like, even when the compression ratio of the gasket 500 is managed in the lower limit mode, the extreme end of the second extension portion 430 needs to be designed to be spaced apart from the electrode assembly by a predetermined distance or more.

For example, when the compression ratio of the gasket 500 is managed in the lower limit mode, the distance between the extreme end of the second extension portion 430 and the insulating plate disposed on the upper surface of the electrode assembly may be designed to be 0.3 mm or more. For example, when considering the aspect of increasing the capacity of the battery, the distance between the extreme end of the second extension portion 430 and the insulating plate disposed on the upper surface of the electrode assembly may be designed to be 0.5 mm or less. That is, the distance between the extreme end of the second extension portion 430 and the insulating plate disposed on the upper surface of the electrode assembly may be designed to be preferably 0.3 mm or more and 0.5 mm or less.

The body portion 410, the first extension portion 420, and the second extension portion 430 of the gasket 500 are described separately with reference to FIG. 5, but this is only to clearly describe the structure of the gasket 500. The body portion 410, the first extension portion 420, and the second extension portion 430 may be formed integrally, and the gasket 500 may have a ring shape that is connected as a whole.

FIG. 6 is a partially enlarged view illustrating a shape of a gasket 600 according to another embodiment of the present disclosure. FIG. 6 may be a partially enlarged view of an area C of the gasket illustrated in FIG. 4. In the description with reference to FIG. 6, configurations described or duplicated with reference to FIG. 1 are omitted.

In an embodiment, the gasket 600 may include the substantially cylindrical body portion 410, the first extension portion 420 extending in a substantially vertical direction from the body portion 410, and the second extension portion 430 extending obliquely downward at a predetermined angle from the first extension portion 420.

The second extension portion 430 may extend obliquely downward at a predetermined angle from the first extension portion 420, and may include the inner surface 432, the lower surface 434, the inclined portion 436, the upper inclined surface 437, and the lower inclined surface 438.

**In** an embodiment, the lower surface 434 and the inner surface 432 may be formed at the end portion of the second extension portion 430. The lower surface 434 of the second extension portion 430 may extend in a horizontal direction (X-axis) from the lower inclined surface 438, and the inner surface 432 may extend in a vertical direction (Y-axis) from the upper inclined surface 437.

In an embodiment, the inclined portion 436 may be formed between the lower surface 434 and the inner surface 432 of the second extension portion 430. The inclined portion 436 is formed by chamfering at least a portion of the lower surface 434 and at least a portion of the inner surface 432 at a corner at which the lower surface 434 and the inner surface 432 of the second extension portion 430 are in contact with each other (i.e. if the chamfer was not present). Accordingly, the width w1 of the inclined portion 436 may be formed to be 30% to 70% of the width w2 of the lower surface 434 before being chamfered. In addition, the height h1 of the inclined portion 436 may be 30% to 70% of the height h2 of the inner surface 432 before being chamfered.

In an embodiment, based on the cross-sectional view of the gasket 600 in the vertical direction (Y-axis), the vertical cross-section of the inclined portion 436 may be formed to be inclined upward in the shape of a curve. For example, the inclined portion 436 may have a substantially convexly rounded shape in the direction in which the second extension portion 430 extends from the first extension portion 420.

By this configuration, when the secondary battery is assembled, the rounded inclined portion 436 may be disposed to face the electrode assembly side, so that even when the second extension portion 430 of the gasket 600 comes into contact with the electrode assembly due to sagging of the second extension portion 430, damage to the electrode assembly may be minimized.

The shape of the inclined portion 436 may vary, as long as a corner at which the lower surface 434 and the inner surface 432 of the second extension portion 430 are in contact with each other is removed.

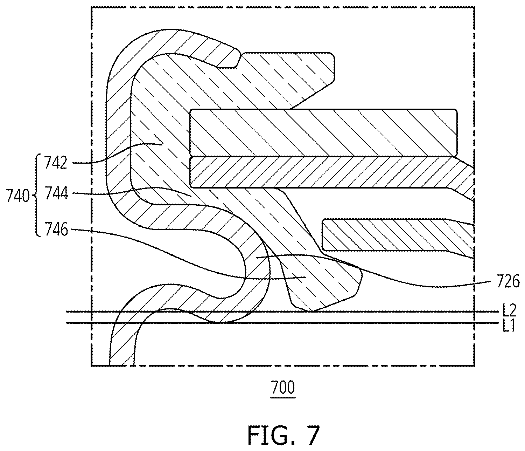

FIG. 7 is a drawing showing an example 700 to which a gasket 740 according to an embodiment of the present disclosure is applied. In an embodiment, the gasket 740 may include a body portion 742, a first extension portion 744 extending from the body portion 742, and a second extension portion 746 extending obliquely downward from the first extension portion 744. The second extension portion 746 may be disposed to surround at least a portion of the beading portion 726 formed in the case. An electrode assembly may be disposed below the beading portion 726, and the electrode assembly and the insulating plate placed on the upper surface of the electrode assembly may be disposed to be spaced apart from the lower line L1 of the beading portion 726 by a certain distance or more.

Referring to FIG. 7, since the second extension portion 746 includes an inclined portion formed by chamfering the lower surface and the inner surface, it may be seen that in the crimping portion formation process, even when the end portion of the second extension portion 746 moves obliquely downward, the end line L2 of the second extension portion 746 is formed above the lower line L1 of the beading portion 726. In this case, the electrode assembly and insulating plate disposed below the lower line L1 of the beading portion 726 do not come into contact with the second extension portion 746 and are not interfered with by the second extension portion 746, so that damage to the electrode assembly due to sagging of the second extension portion 746 may be minimized.

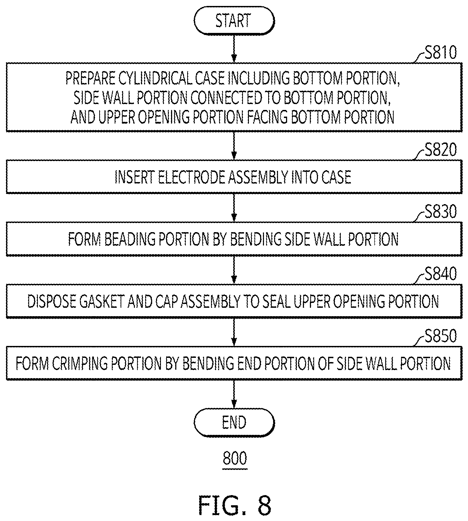

FIG. 8 is a flowchart 800 of a method of manufacturing a secondary battery according to another embodiment of the present disclosure. A method of manufacturing a secondary battery may be initiated by preparing a cylindrical battery including a bottom portion, a side wall portion connected to the bottom portion, and an upper opening portion facing the bottom portion (S810). After that, the electrode assembly may be inserted into the case (S820). In addition, a beading portion may be formed by bending the side wall portion of the case (S830).

Then, the gasket and cap assembly may be disposed to seal the opening (S840). Here, the gasket may include a cylindrical body portion, a first extension portion extending from the body portion toward the inside of the case, and a second extension portion extending obliquely downward from the first extension portion toward the bottom portion. In addition, the cap assembly may include a cap up, a safety vent disposed below the cap up, and a cap down disposed below the safety vent and electrically connected to the electrode assembly. In this case, the gasket may insulate the case from the safety vent and cap up.

In an embodiment, the second extension portion may include an inclined portion formed by chamfering a lower surface and an inner surface thereof. In this case, the width w1 of the inclined portion may be 30% to 70% of the width w2 of the lower surface before the second extension is chamfered. In addition, the height h1 of the inclined portion may be 30% to 70% of the height h2 of the inner surface of the second extension portion before being chamfered. In addition, the vertical cross section of the inclined portion may be in the form of a straight line. Alternatively, the vertical cross section of the inclined portion may be in the form of a curve.

Then, a crimping portion may be formed by bending the end portion of the side wall portion (S850). Forming the crimping portion may include bending an end portion of the side wall portion such that at least a portion of the first extension portion and the second extension portion of the gasket are in close contact with the beading portion while the second extension portion moves obliquely downward toward the bottom portion.

In an embodiment, an insulating plate may be disposed to be in contact with the upper surface of the electrode assembly. In addition, the second extension may be disposed at a predetermined distance or more from the insulating plate while at least a portion of the second extension is in close contact with the beading portion. In this case, a distance at which the second extension is spaced from the insulating plate may be 0.3 mm or more.

The flow chart of FIG. 8 and the description above are only examples of the present disclosure, and the scope of the present disclosure is not limited to the flow chart of FIG. 8 and the description above. For example, one or more steps in the flowchart and/or the descriptions above may be added, changed, or deleted, the order of one or more steps may be changed, and one or more steps may be performed simultaneously.

By way of summation and review, after inserting the electrode assembly into the case, the top of the case may be bent over the electrode assembly to form a beading portion. After that, the gasket and the cap assembly may be placed on the beading portion, and a crimping portion may be formed by bending the end portion of the case to fix the gasket and cap assembly. However, the gasket may sag and interfere with the electrode assembly during the process of forming a crimping portion by bending the case.

In contrast, example embodiments provide a secondary battery and a method of manufacturing the same, where a corner in which the lower surface and the inner surface of the second extension portion of the gasket are in contact with each other is chamfered. Therefore, even when the second extension portion sags and the end portion of the second extension portion moves obliquely downward toward the bottom portion of the case, the electrode assembly may be prevented from interfering with the second extension portion.

According to some embodiments, a corner in which the lower surface and the inner surface of the second extension portion of the gasket are in contact with each other is chamfered round, so that even when the second extension portion comes into contact with the electrode assembly due to sagging of the gasket, damage to the electrode assembly may be minimized.

Embodiments are set out in the following clauses:
Clause 1. A secondary battery comprising:
   an electrode assembly;
   a cylindrical case that comprises a bottom portion, a side wall portion connected to the bottom portion, and an upper opening portion facing the bottom portion, and accommodates the electrode assembly;
   a cap assembly coupled to one end of the side wall portion of the case; and
   a gasket interposed between the case and the cap assembly, wherein
   the gasket comprises a cylindrical body portion, a first extension portion extending from the body portion toward the inside of the case, and a second extension portion extending obliquely downwards from the first extension portion toward the bottom portion, and
   the second extension portion comprises an inclined portion formed by chamfering a lower surface and an inner surface.
Clause 2. The secondary battery according to clause 1, wherein
   a width of the inclined portion is 30% to 70% of a width of the lower surface of the second extension portion before being chamfered.
Clause 3. The secondary battery according to clause 1 or clause 2, wherein
   a height of the inclined portion is 30% to 70% of a height of the inner surface of the second extension portion before being chamfered.
Clause 4. The secondary battery according to any one of clauses 1 to 3, wherein
   a vertical cross section of the inclined portion is in a form of a straight line.
Clause 5. The secondary battery according to any one of clauses 1 to 4, wherein
   a vertical cross section of the inclined portion is in a form of a curve.
Clause 6. The secondary battery according to any one of clauses 1 to 5, wherein
   the side wall portion of the case comprises a crimping portion formed by bending an end portion of the side wall portion, and a beading portion formed by bending the side wall portion inwardly below the crimping portion, and
   the electrode assembly is accommodated below the beading portion.
Clause 7. The secondary battery according to clause 6, wherein
   the body portion of the gasket is in close contact with the crimping portion, and
   at least a portion of the first extension portion and the second extension portion of the gasket is disposed to be in close contact with the beading portion and surround at least a portion of an inner surface of the beading portion.
Clause 8. The secondary battery according to clause 7, further comprising:
   an insulating plate disposed on an upper surface of the electrode assembly, wherein
   the second extension is disposed at a predetermined distance or more from the insulating plate while at least a portion of the second extension is in close contact with the beading portion.
Clause 9. The secondary battery according to clause 8, wherein
   a distance at which the second extension is spaced from the insulating plate is 0.3 mm or more.
Clause 10. The secondary battery according to any one of clauses 1 to 9, wherein
   the cap assembly comprises a cap up, a safety vent disposed below the cap up, and a cap down disposed below the safety vent and electrically connected to the electrode assembly.
Clause 11. The secondary battery according to clause 10, wherein
   the gasket insulates the case from the safety vent and the cap up.
Clause 12. A method of manufacturing a secondary battery, comprising:
   preparing a cylindrical case comprising a bottom portion, a side wall portion connected to the bottom portion, and an upper opening portion facing the bottom portion;
   inserting an electrode assembly into the case;
   forming a beading portion by bending the side wall portion;
   disposing a gasket and a cap assembly to seal the upper opening portion; and
   forming a crimping portion by bending an end portion of the side wall portion, .wherein
   the gasket comprises a cylindrical body portion, a first extension portion extending from the body portion toward the inside of the case, and a second extension portion extending obliquely downwards from the first extension portion toward the bottom portion, and
   the second extension portion comprises an inclined portion formed by chamfering a lower surface and an inner surface.
Clause 13. The method of manufacturing a secondary battery according to clause 12, wherein
   a width of the inclined portion is 30% to 70% of a width of the lower surface of the second extension portion before being chamfered.
Clause 14. The method of manufacturing a secondary battery according to clause 12 or clause 13, wherein
   a height of the inclined portion is 30% to 70% of a height of the inner surface of the second extension portion before being chamfered.
Clause 15. The method of manufacturing a secondary battery according to any one of clauses 12 to 14, wherein
   a vertical cross section of the inclined portion is in a form of a straight line.
Clause 16. The method of manufacturing a secondary battery according to any one of clauses 12 to 15, wherein
   a vertical cross section of the inclined portion is in a form of a curve.
Clause 17. The method of manufacturing a secondary battery according to any one of clauses 12 to 16, wherein
   the forming the crimping portion comprises
   bending an end portion of the side wall portion such that at least a portion of the first extension portion and the second extension portion of the gasket are in close contact with the beading portion while the second extension portion moves obliquely downwards toward the bottom portion.
Clause 18. The method of manufacturing a secondary battery according to clause 17, wherein
   an insulating plate is disposed to be in contact with the upper surface of the electrode assembly, and
   the second extension is disposed at a predetermined distance or more from the insulating plate while at least a portion of the second extension is in close contact with the beading portion.
Clause 19. The method of manufacturing a secondary battery according to clause 18, wherein
   a distance at which the second extension is spaced from the insulating plate is 0.3 mm or more.
Clause 20. The method of manufacturing a secondary battery according to any one of clauses 12 to 19, wherein
   the cap assembly comprises a cap up, a safety vent disposed below the cap up, and a cap down disposed below the safety vent and electrically connected to the electrode assembly, and
   the gasket insulates the case from the safety vent and the cap up.

However, aspects and features of the present disclosure are not limited to those described above, and other aspects and features not mentioned will be clearly understood by a person skilled in the art from the detailed description, described above.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (100), comprising:
an electrode assembly (110);
a cylindrical case (120 220) including a bottom portion (122), a side wall portion (124) connected to the bottom portion (122), and an upper opening portion facing the bottom portion (122), the cylindrical case (120 220) accommodating the electrode assembly (110);
a cap assembly (130, 230) coupled to the upper opening portion; and
a gasket (140, 240) between the cylindrical case (120, 220) and the cap assembly (130), the gasket (140, 240) including:
a cylindrical body portion (242, 342, 410, 742),
a first extension portion (244, 344, 420, 744) extending from the cylindrical body portion (242, 342, 410, 742) toward an interior of the cylindrical case (120 220), and
a second extension portion (246, 346, 430, 746) extending obliquely downward from the first extension portion (244, 344, 420, 744) toward the bottom portion of the cylindrical case (120 220), the second extension portion (246, 346, 430, 746) including a lower surface (434), an inner surface (432), and an inclined portion (436) extending between and obliquely with respect to the lower surface (434) and the inner surface (432).

2. The secondary battery according to claim 1, wherein:
an imaginary intersection of an extension line of the lower surface (434) and an extension line of the inner surface (432) define an imaginary corner, and
a first width of the extension line of the lower surface (434) to the imaginary corner is 30% to 70% of a total width of the lower surface (434) and the first width.

3. The secondary battery according to claim 2, wherein a first height of the extension line of the inner surface (432) to the imaginary corner is 30% to 70% of a total height of the inner surface (432) and the first height.

4. The secondary battery according to any one of the preceding claims, wherein a vertical cross section of the inclined portion (436) is in a form of a straight line.

5. The secondary battery according to any one of claims 1 to 3, wherein a vertical cross section of the inclined portion (436) is in a form of a curve.

6. The secondary battery according to any one of the preceding claims, wherein:
the side wall portion (124) of the cylindrical case (120, 220) includes a crimping portion and a beading portion, the crimping portion (228) being bent from an end portion of the side wall portion (124), and the beading portion (226) being bent from the side wall portion (!24) inwardly below the crimping portion (228), and
the electrode assembly is accommodated below the beading portion (226).

7. The secondary battery according to claim 6, wherein:
the cylindrical body portion (242, 342, 410, 742) of the gasket (140, 240) is in close contact with the crimping portion (228), and
at least a portion of the first extension portion (244, 344, 420, 744) and the second extension portion (246, 346, 430, 746) of the gasket (140, 240) is in close contact with the beading portion (226) and surrounds at least a portion of an inner surface of the beading portion (226).

8. The secondary battery according to claim 7, further comprising an insulating plate (150) on an upper surface of the electrode assembly (110), the second extension portion (246, 346, 430, 746) being at a predetermined distance or more from the insulating plate (150) while at least a portion of the second extension portion (246, 346, 430, 746) is in close contact with the beading portion (226).

9. The secondary battery according to claim 8, wherein the predetermined distance is 0.3 mm or more.

10. The secondary battery according to any one of the preceding claims, wherein the cap assembly (130, 230) includes a cap up (232), a safety vent (234) below the cap up (232), and a cap down (238) below the safety vent (234), the cap down (238) being electrically connected to the electrode assembly (110), and wherein the gasket (140, 240) insulates the cylindrical case (120, 220) from the safety vent (234) and the cap up (232).

11. A method of manufacturing a secondary battery, the method comprising:
preparing a cylindrical case (120, 220) including a bottom portion (122),, a side wall portion (124), connected to the bottom portion (122),, and an upper opening portion facing the bottom portion (122),;
inserting an electrode assembly (110) into the cylindrical case (120, 220);
forming a beading portion (226), by bending the side wall portion (124),;
disposing a gasket (140, 240) and a cap assembly (130, 230) to seal the upper opening portion; and
forming a crimping portion(228) by bending an end portion of the side wall portion (124),
wherein:
the gasket (140, 240) includes a cylindrical body portion, a first extension portion extending from the cylindrical body portion (242, 342, 410, 742) toward an interior of the case (120, 220), and a second extension portion (246, 346, 430, 746) extending obliquely downward from the first extension portion (244, 344, 420, 744) toward the bottom portion (122), and
the second extension portion (246, 346, 430, 746) includes an inclined portion (436) formed by chamfering a lower surface (434) and an inner surface (432) of the second extension portion (246, 346, 430, 746).

12. The method of manufacturing a secondary battery according to claim 11, wherein a width of the inclined portion (436) is 30% to 70% of a width of the lower surface (434) of the second extension portion (246, 346, 430, 746) before being chamfered.

13. The method of manufacturing a secondary battery according to claim 11 or claim 12, wherein a height of the inclined portion (436) is 30% to 70% of a height of the inner surface (434) of the second extension portion (246, 346, 430, 746) before being chamfered.

14. The method of manufacturing a secondary battery according to any one of claims 11 to 13, wherein forming the crimping portion (228) includes bending the end portion of the side wall portion (124) such that at least a portion of the first extension portion (244, 344, 420, 744) and the second extension portion (246, 346, 430, 746) of the gasket (140, 240) are in close contact with the beading portion (226) while the second extension portion (246, 346, 430, 746) moves obliquely downward toward the bottom portion (122).

15. The method of manufacturing a secondary battery according to claim 14, wherein:
an insulating plate (150) is disposed to be in contact with an upper surface of the electrode assembly (110), and
the second extension portion (246, 346, 430, 746) is disposed at a predetermined distance or more from the insulating plate (150) while at least a portion of the second extension portion (246, 346, 430, 746) is in close contact with the beading portion (226).
